# EUROPEAN PATENT APPLICATION

(11) **EP 1 174 314 A2**
(43) Date of publication of application: **23.01.2002**
(21) Application number: 01117293.9
(22) Date of filing: 17.07.2001
(51) Int. Cl.: B60R 25/02

(54) **Electric vehicle steering lock**

(30) Priority: 18.07.2000 IT TO000712
(71) Applicant: TRW ITALIA S.P.A., 25063 Gardone Val Trompia (IT)
(72) Inventor: Fissolo, Claudio, 10040 Rivalta (IT)
(74) Representative: Cerbaro, Elena, Dr.

(57) **Abstract**

In an electric vehicle steering lock (1), a member (6) for angularly locking a steering shaft (2) is moved by an actuating assembly (8) between a forward work position angularly locking the steering shaft (2), and a withdrawn rest position allowing the steering shaft (2) to rotate freely. The actuating assembly (8) has an electric motor (10); a transmission device (16) interposed between the motor (10) and the lock member (6), and having a rack-and-sprocket transmission (18); and a retaining device for retaining the lock member (6) and which is deactivated by the rack of the rack-and-sprocket transmission.

## Description

The present invention relates to an electric vehicle steering lock.

More specifically, the present invention relates to an electric steering lock of the type comprising an elongated sliding lock member, which is pushed into a forward work position locking the steering shaft of the vehicle in an angularly fixed position, and is moved by an electric motor into a withdrawn rest position allowing the steering shaft to rotate freely.

The electric motor of known steering locks is normally connected to the lock member by a cam-and-tappet transmission, which, though widely used, poses numerous problems, especially as regards the cam, by being fairly complex and highly expensive to produce. Moreover, even though well made, some known transmissions still prove unreliable.

It is an object of the present invention to provide an electric steering lock designed to eliminate the aforementioned drawbacks, and which, in particular, is extremely straightforward, is efficient and reliable, and is cheap to produce.

According to the present invention, there is provided an electric vehicle steering lock comprising an angular lock member; and actuating means for moving the angular lock member between a forward work position maintaining a steering shaft in an angularly fixed position, and a withdrawn rest position allowing the steering shaft to rotate freely; said actuating means comprising an electric motor, and transmission means interposed between the electric motor and the angular lock member; characterized in that said transmission means comprise a rack-and-sprocket transmission.

A non-limiting embodiment of the invention will be described by way of example with reference to the accompanying drawings, in which:
Figure 1 shows a view in perspective, with parts removed for clarity, of a preferred embodiment of the electric steering lock according to the present invention;
Figure 2 shows a larger-scale view in perspective of a detail of Figure 1.

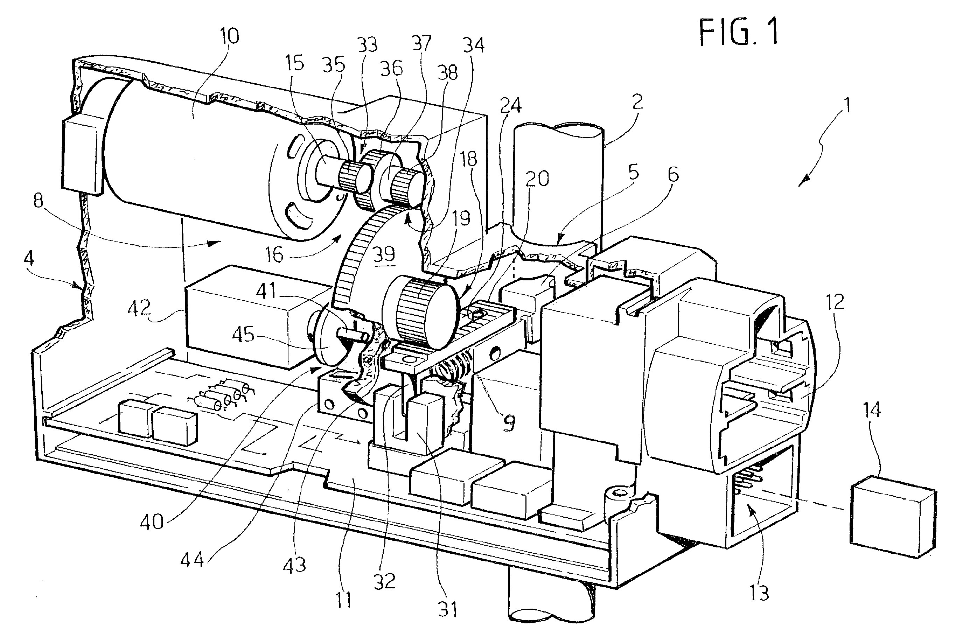

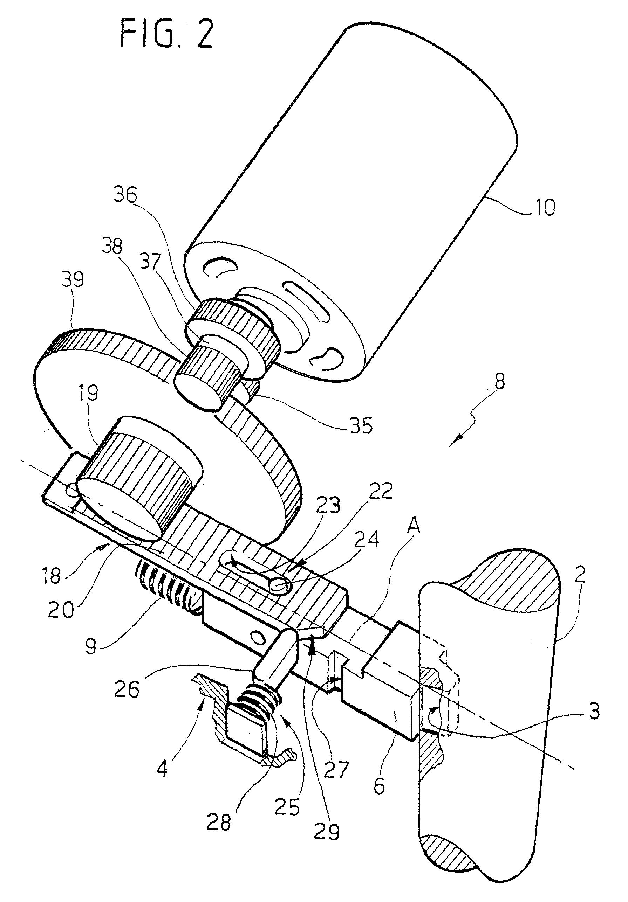

Number 1 in Figure 1 indicates as a whole an electric vehicle steering lock connected to a known steering assembly, a steering shaft of which is indicated 2 in the accompanying drawings and comprises a radial seat 3 (Figure 2).

Steering lock 1 comprises an outer casing 4, which defines an outer seat 5 (Figure 1) in which shaft 2 is retained by a known connecting assembly not shown, and houses an elongated member 6 for angularly locking shaft 2 with respect to casing 4. Member 6 is fitted to casing 4 to slide axially in a direction A (Figure 2) perpendicular to shaft 2, and is movable, by an actuating assembly 8, between a forward angular lock position projecting inside seat 5 and engaging radial seat 3 (Figure 2), and a withdrawn rest position allowing shaft 2 to rotate freely with respect to casing 4.

As shown in Figure 1, and particularly in Figure 2, actuating assembly 8 comprises a spring 9 for pushing member 6 into the forward position; and an electric motor 10 controlled by an electronic drive circuit 11 having a first power connector 12, and a second connector 13 for receiving signals and commands from a known central control unit 14 (shown schematically) on the vehicle.

Motor 10 comprises an outer casing fitted integrally to an inner surface of casing 4; and an output shaft 15 perpendicular to both direction A and shaft 2, and connected to member 6 by a mechanical transmission 16. Transmission 16 forms part of assembly 8, and comprises a rack-and-sprocket assembly 18 in turn comprising a sprocket 19 fitted to casing 4 to rotate about an axis parallel to and separated transversely from output shaft 15. Assembly 18 also comprises a rack 20, which meshes with sprocket 19, extends in contact with member 6 to define an extension of member 6, and is connected to member 6 by a guide-and-slide assembly 22 enabling rack 20 to move, with respect to member 6 and parallel to direction A, between a withdrawn axial limit position and a forward axial limit position. More specifically, guide-and-slide assembly 22 comprises a slot 23 formed in rack 20, parallel to direction A and through the teeth of rack 20; and a pin 24 fitted integrally to member 6 and engaging slot 23 in axially sliding manner.

With reference to Figure 2, member 6 is retained, in use, in the withdrawn position by a releasable mechanical retaining device 25 comprising a tooth 26, which is fitted in sliding manner to casing 4 and is pushed by a compression spring 28 into a forward lock position engaging a lateral seat 27 on member 6, and into a withdrawn rest position by an inclined surface 29 of rack 20, which acts as a withdrawing cam as rack 20 moves with respect to member 6. The withdrawn position of member 6 is detected by a known presence sensor 31 - conveniently a photodiode or microswitch - which forms part of circuit 11, is activated by an appendix 32 on rack 20, and emits a stop signal to stop motor 10 upon member 6 reaching the withdrawn position.

With reference to the accompanying drawings, transmission 16 also comprises two pairs of gears 33 and 34, which are interposed between motor 10 and sprocket 19 and define respective stages for reducing the speed of motor 10. More specifically, pair 33 comprises a drive gear 35 fitted to output shaft 15 of motor 10; and a driven gear 36 fitted to an intermediate shaft 37 fitted in rotary and axially-fixed manner to casing 4. Intermediate shaft 37 is also fitted with a drive gear 38 of pair 34, a driven gear 39 of which is connected integrally to and coaxially with sprocket 19. When member 6 is in the withdrawn position, rotation of gear 39 is prevented by an electromechanical device 40 housed in casing 4 and comprising a lock pin 41, which is connected integrally to an output member of an electromagnetic linear actuator 42 controlled by electronic circuit 11 and for moving pin 41 between a forward work position in which pin 41 extends through a hole 43 formed in gear 39, and a withdrawn rest position allowing gear 39 to rotate freely. The forward position of pin 41 is detected by a microswitch 44, which forms part of circuit 11 and, upon pin 41 reaching the forward position, is switched by an outer radial flange 45 on the output member of actuator 42 to stop both actuator 42 and motor 10.

Operation of steering lock 1 will now be described as of a lock condition in which member 6 and rack 20 are in their forward positions, and pin 41 and tooth 26 are maintained in their withdrawn rest positions by actuator 42 and rack 20 respectively.

As of the above condition, upon central control unit 14 of the vehicle emitting a release consent signal, circuit 11 activates motor 10 to withdraw rack 20, which, in opposition to spring 9 and by means of pin 24, draws member 6 along with it into the withdrawn position, in which member 6 is locked mechanically by tooth 26 clicking inside seat 27. At the same time, circuit 11 receives the signal from sensor 31 and provides for deactivating motor 10 and activating electromagnetic linear actuator 42, which inserts pin 41 inside hole 43 to lock transmission 16. Insertion of pin 41 inside hole 43, i.e. correct operation of electromagnetic linear actuator 42, is controlled by microswitch 44.

To reset the original lock condition, central control unit 14 emits another consent signal, so that circuit 11 first operates actuator 42 to withdraw pin 41 from hole 43, and then operates motor 10, which, rotating in the opposite direction to before, first moves rack 20 forward with respect to member 6, without moving member 6 from the withdrawn position. During the initial forward movement of rack 20, surface 29 of the rack gradually moves the tooth into the withdrawn position to release member 6, which, pushed by spring 9, moves forward with respect to rack 20 and clicks into seat 3.

As compared with known solutions, steering lock 1 described is therefore extremely straightforward and cheap to produce, and extremely efficient, reliable and, above all, safe. As regards reliability and safety, in particular, steering lock 1 described comprises two in-series devices for retaining member 6 in the withdrawn release position : one electromagnetic, and which can only be deactivated by a consent signal supplied to electronic circuit 11 by central control unit 14 of the vehicle; and the other purely mechanical, and which is deactivated by the initial movement of rack 20. Also, the locking of transmission 16 by actuator 42 is controlled each time by microswitch 44.

As will be clear from the foregoing description, seat 5 on casing 4, being identical to that of conventional steering locks, enables an electric steering lock to be obtained which can be substituted for a conventional steering lock with no alterations to either the casing or the steering column.

Clearly, changes may be made to steering lock 1 as described herein without, however, departing from the scope of the accompanying Claims. In particular, different devices may be provided for connecting rack 20 to member 6; and a different transmission may be provided between motor 10 and rack-and-sprocket assembly 18.

## Claims

1. An electric vehicle steering lock (1) comprising an angular lock member (6); and actuating means (8) for moving the angular lock member (6) between a forward work position maintaining a steering shaft (2) in an angularly fixed position, and a withdrawn rest position allowing the steering shaft (2) to rotate freely; said actuating means (8) comprising an electric motor (10), and transmission means (16) interposed between the electric motor (10) and the angular lock member (6); **characterized in that** said transmission means (16) comprise a rack-and-sprocket transmission (18).

2. A steering lock as claimed in Claim 1, **characterized in that** said rack-and-sprocket transmission comprises a rack connected to said angular lock member.

3. A steering lock as claimed in Claim 2, **characterized by** comprising relative mobility means (22) interposed between said rack (20) and said angular lock member (6).

4. A steering lock as claimed in Claim 3, **characterized in that** said relative mobility means comprise a guide-and-slide assembly (22); and limit stop means (23, 24) enabling axial displacement of said rack (20), with respect to said angular lock member (6), between two limit stop positions.

5. A steering lock as claimed in Claim 3, **characterized in that** said guide-and-slide means and said limit stop means comprise a pin (24) carried by one of said rack (20) and said angular lock member (6); and a slot (23) engaged in axially-sliding manner by said pin (24) and carried by the other of said angular lock member (6) and said rack (20).

6. A steering lock as claimed in one of Claims 3 to 5, **characterized by** comprising releasable mechanical first retaining means (26) for retaining said angular lock member (6) in the withdrawn position; deactivating means (29) for deactivating said first retaining means (26) being controlled by said rack (20).

7. A steering lock as claimed in Claim 6, **characterized in that** said deactivating means are cam means (29) carried by said rack (20).

8. A steering lock as claimed in Claim 7, **characterized in that** said first retaining means comprise a retaining member (26) movable, with respect to said angular lock member (6), between a forward retaining position engaging a seat (27) formed in the angular lock member (6), and a withdrawn position permitting free translation of the angular lock member (6); said cam means (29) acting directly on said retaining member (26).

9. A steering lock as claimed in any one of the foregoing Claims, **characterized in that** said rack-and-sprocket transmission (18) comprises a sprocket (19) meshing with the rack (20) and rotating about an axis of rotation parallel to the axis of rotation of said electric motor (10); releasable second retaining means being provided to retain the sprocket (19) in an angularly-fixed position when said angular lock member (6) is in the withdrawn rest position.

10. A steering lock as claimed in Claim 9, **characterized in that** said second retaining means comprise a pin (41) parallel to said axis of rotation of said sprocket (19); and electromagnetic actuating means (42) for moving said pin (41) to and from a retaining seat (43) associated with said sprocket (19).

11. A steering lock as claimed in Claim 10, **characterized by** comprising detecting and control means (44) associated with said pin (41) to detect the axial position of the pin (41) and to emit a disabling signal disabling said electric motor (10) when the pin (41) engages said retaining seat (43).

12. A steering lock as claimed in any one of the foregoing Claims, **characterized in that** said transmission means (16) also comprise a gear transmission (33, 34) interposed between said electric motor (10) and said rack-and-sprocket transmission (18); said gear transmission (33, 34) having a first (33) and at least a second (34) reduction stage.

13. A steering lock as claimed in any one of the foregoing Claims, **characterized by** comprising an outer casing (4) having an outer seat (5) for at least partly receiving a steering shaft (2); said angular lock member (6) projecting outside the casing (4) and inside said outer seat (5).
